# EUROPÄISCHE PATENTSCHRIFT

(11) **EP 1 863 584 B1**
(45) Veröffentlichungstag und Bekanntmachung des Hinweises auf die Patenterteilung: **03.10.2012**
(21) Anmeldenummer: 06706731.4
(22) Anmeldetag: 08.02.2006
(51) Int. Cl.: B01D 29/52, C02F 1/46

(54) **FILTERANLAGE UND VERFAHREN ZUM BETRIEB DER FILTERANLAGE**
FILTER INSTALLATION AND METHOD FOR OPERATING ONE SUCH FILTER INSTALLATION
INSTALLATION DE FILTRATION ET PROCEDE POUR FAIRE FONCTIONNER CETTE DERNIERE

(30) Priorität: 24.03.2005 DE 102005013673
(43) Veröffentlichungstag der Anmeldung: 12.12.2007
(73) Patentinhaber: Hydac Process Technology GmbH, 66280 Sulzbach/Saar (DE)
(72) Erfinder: WNUK, Ralf, 66450 Bexbach (DE); SCHNEIDER, Thomas, 66299 Friedrichsthal (DE)
(74) Vertreter: Bartels, Martin Erich Arthur
(86) Internationale Anmeldenummer: PCT/EP2006/001087
(87) Internationale Veröffentlichungsnummer: WO 2006/099915

(56) Entgegenhaltungen:
- EP-A- 0 245 585
- WO-A-03/002406
- DE-A1- 3 640 841
- DE-A1- 10 359 443
- DE-A1- 19 711 589
- US-A- 5 013 415
- US-A1- 2004 055 939

## Beschreibung

Die Erfindung betrifft eine Filteranlage, insbesondere Seewasserfilteranlage, zur Filtration eines mit Mikroorganismen kontaminierten Fluids, umfassend eine Fluidleitung zum Transport des Fluids, ein Filtergehäuse, das in die Fluidleitung geschaltet ist und einen Filtereinlass für zu filtrierendes Fluid und einen Filterauslass für gefiltertes Fluid aufweist, mindestens ein Filterelement, das im Filtergehäuse angeordnet ist und Mittel mit einer sich schädlich auf Mikroorganismen auswirkenden Wirksubstanz aufweist.

Durch das DE 20 2004 002 616 U1 ist eine Wasserfilteranlage, insbesondere Seewasserfilteranlage, bekannt, umfassend eine Wasserleitung als Fluidleitung und einer zwischen zwei Leitungsabschnitten der Fluidleitung zwischengeschalteten Filtereinrichtung mit einzelnen Filterelementen, die mit einer im Filterinnenraum angeordneten Filterfläche zum Filtern von Wasser versehen sind, wobei ein Leitungsabschnitt eine Zulaufleitung zur Filtereinrichtung für das zu reinigende Wasser und einen Leitungsabschnitt einer Ablaufleitung für das gefilterte Wasser bildet. Bei der bekannten Lösung ist der Zulauf und der Ablauf der Filtereinrichtung gegenüber der Wasserleitung mit Absperreinrichtungen (Ventilen) absperrbar, wobei der Filterinnenraum mittels einer Aufheizeinrichtung bei abgesperrten Absperreinrichtungen auf eine Solltemperatur von mehr als 50°c, vorzugsweise etwa 60°C ± 5°C, zur Dekontaminierung der Filterfläche aufheizbar ist, wobei vorzugsweise die Filtereinrichtung in der Art eines Rückspülfilters ausgebildet ist mit einer Rückspüleinrichtung zum Abreinigen der Filterflächen im Gegenstrom zur eigentlichen Filtrierrichtung.

Auf Schiffen, wie beispielsweise Container-Schiffen, wird sog. Ballastwasser in einem bestimmten Hafen oder unterwegs in bestimmten Gewässern an Bord gepumpt, um fehlenden Schiffsballast ausgleichen zu können und während der Fahrt des Schiffes läßt sich beispielsweise durch eine abnehmende Treibstoffmenge ein Ballastausgleich erzielen, indem man neuen Seewasserballast aufnimmt und/oder zwischen den einzelnen Ballastkammern Seewasser zur Austarierung des Schiffes umpumpt. Wird ein neuer Hafen angesteuert und zur Beladung des Schiffes mit neuem Gut Ballastwasser dann in das Hafenbecken abgepumpt, ist nicht auszuschließen, dass im Ursprungshafen oder unterwegs aufgenommene lebende Organismen im neuen Anlegehafen abgegeben werden, so dass in der Art eines biologischen Tourismus Fremdorganismen in Biotopen heimisch werden, wo sie eigentlich nichts zu suchen haben, mit der Folge, dass sie an sich dort heimische Arten bis zu deren Aussterben völlig verdrängen können, was zu gravierenden Umweltsituationen führen kann. Neben Viren, Pilzen, Algen, Protozoen können auch andere Mikroorganismen derart mit transportiert werden; es können aber durchaus auch Kleinstorganismen mit transportiert werden einschließlich Muscheln und dergleichen mehr.

Mit der vorbekannten Lösung nach der deutschen Gebrauchsmusterschrift wird der dahingehenden biologischen Kontaminierung dadurch begegnet, dass man alle im Filterinnenraum der Filtereinrichtung angeordneten Teile für eine ausreichende Zeitspanne auf eine hinreichend hohe Temperatur, beispielsweise 60°C, aufheizt, um dergestalt Algen, Mikroorganismen und andere Kleinstlebewesen abzutöten. Bei einem entsprechenden Rückspülvorgang werden dann unmittelbar die abgetöteten Organismen wieder in das Ursprungswasser zurückgegeben und nicht nach der anstehenden Seereise in fremde Gewässer eingebracht. Vorzugsweise sieht dabei die bekannte Lösung eine Abreinigung mittels Heißdampf vor. Aufgrund der angesprochenen hohen Temperatur und berücksichtigend, dass Salzwasser erhitzt wird, ist die dahingehende Dekontaminierung hochgradig korrosiv wirkend und führt zu entsprechenden Korrosionsschäden, was die Verwendung von teuren Materialien, wie Duplexstählen, Titan od. dgl., notwendig macht. Zwar ist diese bekannte Lösung biologisch für die Umwelt sehr verträglich; insbesondere entstehen keine toxisch wirkenden Verunreinigungen; allein die Temperatursteuerung für die anzusteuernde und zu überwachende Heizeinrichtung ist sehr aufwändig und bedarf eines entsprechend geschulten Bedienpersonals.

Es ist zwar weiter im Stand der Technik bereits vorgeschlagen worden, die Mikroorganismen in den Filtergeweben einer Filtereinrichtung durch Oxidationstechnologien unter Einsatz von UV-Bestrahlung zu zerstören; allerdings kommt es dadurch zur Bildung von Ozon, Chlordioxid und anderen toxisch wirkenden Verunreinigungen, welche einer industriellen Anwendung entgegenstehen. Die beschriebenen Vorrichtungen im Stand der Technik brauchen nicht auf Seewasseranwendungen eingeschränkt zu sein, sondern können dem Grunde nach immer dort zum Einsatz kommen, wo Probleme auftreten im Hinblick auf bakterielle und organische Verunreinigungen, wie sie beispielhaft auch bei der Wasserfilterung in industriellen Anlagen, wie Kraftwerken, auftreten können.

Durch die US 2004/055939 A1 ist eine Filteranlage der eingangs genannten Art in Form eines Wasserfilters bekannt, bei welchem in den Filterfalten des Filtermaterials eines Filterelementes antibakteriell wirkende Metalle, insbesondere kupferhaltige Metalle, in Partikelform eingebracht sind, die während des Filtrationsbetriebes Ionen freisetzen und für eine Dekontamination des Wassers und des Filters sorgen.

Durch die EP-A-0 245 585 ist eine Anlage zur Filtration von Flüssigkeiten bekannt, bei der aus einem Vorratstank in einem ersten Prozessschritt wässrige Kieselgurlösung zur Beschichtung der Oberfläche der eigentlichen Filterelemente in das Filtergehäuse über eine Zuleitung zugeführt wird. Nachdem der Beschichtungsvorgang für die Filterelemente mit der Kieselgurlösung abgeschlossen ist, wird Kohlendioxydgas in das Filtergehäuse eingeführt, um das übrig gebliebene Wasser aus dem Vorbeschichtungsprozess aus der Vorrichtung abzuführen. Nach Austrag des dahingehenden Prozesswassers wird das Filtergehäuse in einem weiteren, vom ersten getrennten Prozessschritt mit Fluid, beispielsweise in Form von Bier, befüllt und durch die darin befindlichen Filterelemente von etwaigen Verunreinigungen, wie Trubstoffen oder dergleichen befreit. Bei einem weiteren Ausführungsbeispiel der bekannten Lösung wird das Kohlendioxydgas durch Stickstoffgas als inertes Gas ersetzt.

Durch die US-A-5 013 415 sowie die WO 03/002406 A sind Filtrationsanlagen zur Reinigung von Wasser bekannt, wobei das Wasser sowohl mechanisch durch Filter abreinigbar ist, als auch elektrochemisch durch eine Kupferanode gereinigt bzw. dekontaminiert wird. Auch wenn die dahingehenden Kupferanoden in Mehrfachanordnung vorgesehen sind, sind diese weder Bestandteil des Filtergehäuses noch der Filterelemente selbst sondern sind vielmehr im Fluidkreis außerhalb der dahingehenden Filterbestandteile angeordnet.

Ausgehend von diesem Stand der Technik liegt der Erfindung die Aufgabe zugrunde, eine Filteranlage und ein Verfahren zu ihrem Betrieb zur Verfügung zu stellen, die unter Beibehalten der Vorteile der bekannten Lösungen, nämlich eine hochwirksame Dekontaminierung biologischen Materials sicherstellen zu können, dahingehend weiterverbessert sind, dass funktionssicher auch über längere Einsatzzeiten hinweg, ohne dass toxische Nebenprodukte entstehen und ohne dass eine mögliche Korrosion begünstigt wird, eine wirksame, kostengünstige Abreinigung garantiert ist.

Eine dahingehende Aufgabe löst eine Filteranlage mit den Merkmalen des Patentanspruches 1 in seiner Gesamtheit sowie ein Verfahren mit den Merkmalen des Patentanspruches 13. Gemäß dem kennzeichnenden Teil von Patentanspruch 1 ist eine erfindungsgemäße Filteranlage gekennzeichnet durch eine Inertgasversorgung zur Befüllung des Filtergehäuses mit einem Inertgas unter Einbringung einer trockenen, sauerstofffreien Umgebung im Filtergehäuse, und mindestens eine Opferanode, die aus einem solchen Metallwerkstoff aufgebaut ist, der sich schädlich auf Mikroorganismen auswirkt. Vorteilhafte Ausgestaltungen der erfindungsgemäßen Filteranlage und vorteilhafte Varianten des erfindungsgemäßen Verfahrens sind Gegenstände der Unteransprüche.

Dadurch, dass die Mittel zur biologischen Dekontaminierung Wirksubstanzen aufweisen in Form eines inerten Gases und eines speziellen Metalles, das als Opferanode ausgebildet im Filtergehäuse angeordnet ist, ist sichergestellt, dass toxische Verunreinigungen nicht auftreten können und die eingesetzten Wirksubstanzen im Gegensatz zu chemisch hergestellten Fungiziden und Herbiziden umweltverträglich sind, indem man sie dergestalt ohne schädliche Zwischenabbauprodukte in der Natur unmittelbar wiederfindet.

Die angesprochenen Wirksubstanzen nach der Erfindung können auch derart ausgewählt sein, dass Korrosionsschäden vermeidbar sind und insbesondere beim Einsatz spezieller Metalle läßt sich zum einen ein wirksamer Korrosionsschutz aufbauen, auch wenn die Metalle selbst die angesprochenen lebenden Organismen einschließlich Pflanzenmaterial spezifisch abtöten. Die angesprochene Opferanode im jeweiligen Filterelement läßt sich im zugeordneten Filtergehäuse platzsparend unterbringen und insbesondere ist hierdurch der Fluidströmungsverlauf innerhalb des Filtergehäuses nicht behindert, was sich energetisch günstig auf den Gesamtbetrieb der Anlage auswirkt. Mit dem erfindungsgemäßen Verfahren nach dem Anspruch 13 wird die sinnfällige Verwendung der Filteranlage nach Anspruch 1 gelehrt.

Bei einer bevorzugten Ausführungsform der erfindungsgemäßen Filteranlage dient als inertes Gas Stickstoffgas, das aus mindestens einer Vorratsflasche entnehmbar, vorzugsweise nach Beendigung der eigentlichen Filtration in das Innere des Filtergehäuses mit dem jeweiligen Filterelement einspülbar ist. Das inerte Gas Stickstoff schafft innerhalb des Filtergehäuses eine trockene sauerstofffreie Umgebung, die dem Absterben der Lebendorganismen dient. Dahingehendes Stickstoffgas läßt sich apparatetechnisch sehr leicht beherrschen, steht kostengünstig weltweit als Nachfüllgas ohne weiteres zur Verfügung und begegnet wirksam der Korrosionsgefahr. Vorzugsweise ist dabei das inerte Gas in der zuordenbaren Vorratsflasche derart mit einem hohen Druck versehen, dass ein Leerspülen des Filtergehäuses auch dann erfolgen kann, sofern das Filtergehäuse noch mit Seewasser vorgebbaren Druckes (Umgebungsdruck) befüllt ist.

Bei einer weiteren bevorzugten Ausführungsform der erfindungsgemäßen Filteranlage wird als spezielles Metall Kupfer für die Opferanode eingesetzt. Da Kupfer in der Umwelt auftritt und bei entsprechend hoher Verdünnung durch das Salzwasser nicht umweltbelastend ist, ist dieses für den angesprochenen Einsatz besonders gut geeignet, insbesondere was das Abtöten der angesprochenen Lebend-Mikroorganismen anbelangt.

Bei einer besonders bevorzugten Ausführungsform der erfindungsgemäßen Filteranlage ist diese darüber hinaus derart ausgestaltet, dass sie auf der einen Seite einen üblichen Filtrierbetrieb gewährleistet und auf der anderen Seite vorzugsweise gleichzeitig die Rückspülung für einen Teil der Filterelemente erlaubt, um dergestalt abgereinigte Filterelemente für einen neuen Filtrationsbetrieb einsetzen zu können. Vorzugsweise ist dabei ferner vorgesehen, dass ein Fluidaustritt der Filtereinrichtung mit einem ansteuerbaren Sperrventil versehen ist, wobei in Fluidströmrichtung nachfolgend in der Fluidleitung ein Rückschlagventil derart eingesetzt ist, dass in geöffneter Stellung die Umgebung mit der zuordenbaren Fluidleitung verbunden ist. Aufgrund der in Schiffen und Kraftwerksanlagen sehr langen Fluidleitungen lassen sich dergestalt bei abgesperrtem Sperrventil Druckschläge vermeiden, indem Umgebungsluft über das Rückschlagventil in die Fluidleitungen nachströmen kann. Eventuell derart in der Fluidleitung entstehende Luftvolumina lassen sich dann in entgegengesetzter Richtung als Dämpfungsglied einsetzen, sofern in entgegengesetzter Richtung Druckschläge beim Betrieb der Anlage zu erwarten sind.

Bei dem erfindungsgemäßen Verfahren zum Betrieb einer Filteranlage, wie vorstehend beschrieben, wird über eine Fluidleitung zugeführtes, biologisch belastetes Fluid mittels des jeweiligen Filterelementes in einem Filtergehäuse einer Filtereinrichtung von Grobverschmutzungen abfiltriert, wobei Mittel zur biologischen Dekontaminierung des Fluids Wirksubstanzen, wie inerte Gase und/oder Metall, freisetzen. Die erfindungsgemäße Filteranlage kann als Seewasserfilteranlage betrieben werden, aber auch der Wasserfilterung in industriellen Anlagen, wie bei Kraftwerken, dienen. Ferner sind Einsätze immer dann möglich, wenn Probleme innerhalb von Fluiden auftreten mit bakteriellen und/oder organischen Verunreinigungen.

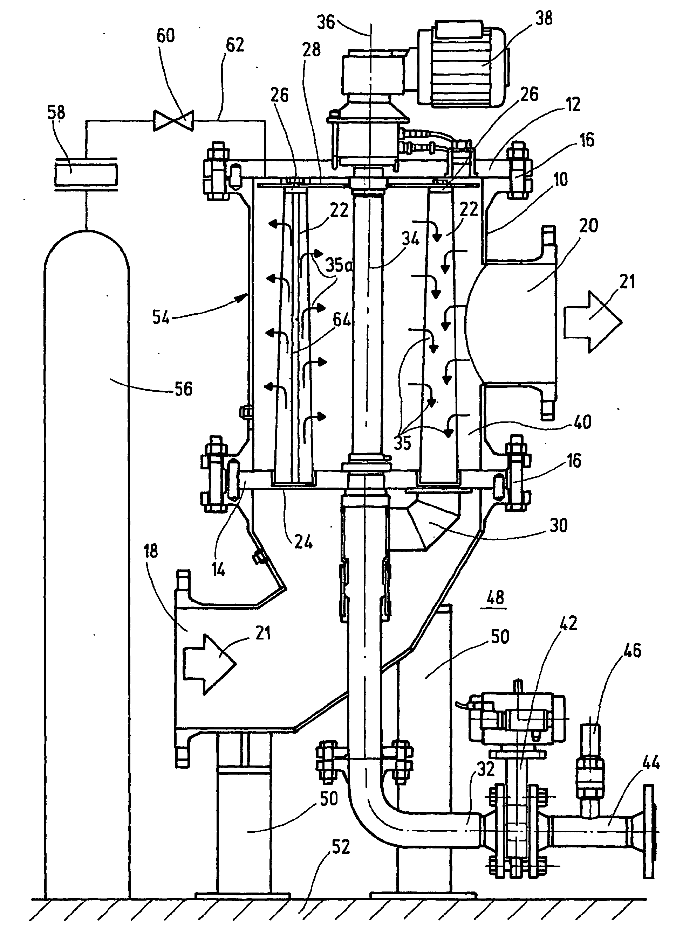

Im folgenden wird die erfindungsgemäße Anordnung gemäß der Zeichnung näher erläutert.

Es zeigt die einzige Figur in prinzipieller und nicht maßstäblicher Darstellung teilweise im Schnitt, teilweise in Ansicht dargestellt, eine Seitenansicht auf eine Ausführungsform der erfindungsgemäßen Filteranlage.

Die in der Figur gezeigte Filteranlage ist in der Art einer Rückspülfiltervorrichtung konzipiert und weist ein zylindrisches Filtergehäuse 10 auf mit zwei Abschlußdeckein 12,14, die über Flanschverbindungen 16 an dem Filtergehäuse 10 festlegbar sind. Das Filtergehäuse 10 der Rückspülfiltervorrichtung weist einen Filtereinlaß 18 auf für das zu filtrierende Fluid sowie einen Filterauslaß 20 für das filtrierte Fluid. Sowohl Filtereinlaß 18 als auch Filterauslaß 20 sind Teile einer nicht näher dargestellten Fluidleitung, die über sehr lange Wegstrecken hinweg, beispielsweise im Laderaum eines Container-Schiffes (nicht dargestellt), verlaufen kann. Die Fluidrichtung im Filtrierbetrieb durch das Gehäuse 10 ist in der Figur mit entsprechenden. Pfeilen 21 symbolisch am Filtereinlaß 18 und am Filterauslaß 20 angegeben.

In die Filtervorrichtung sind nach oben hin konisch zulaufende Filterelemente 22 eingesetzt, wobei an die Stelle der konischen Filterelemente 22 auch zumindest teilweise zylindrische Filterelemente (nicht dargestellt) treten können. Die angesprochenen konischen Filterelemente 22 sind vorzugsweise aus sog. Spaltsiebrohrfilterelementen aufgebaut und sind in Abständen voneinander entlang eines zylindrischen (konzentrischen) Kreisbogens innerhalb des Filtergehäuses 10 angeordnet. Bei einer nicht näher dargestellten Ausführungsform können auch in Gruppen unterteilt mehrfach entlang von zylindrischen Kreisbögen die Filterelemente 22 angeordnet sein. Konische Filterelemente haben den Vorteil, dass sie ein gleichmäßiges Durchströmen erlauben, mit dem Ergebnis eines niedrigen Druckverlustes, und eine vollständige Abreinigung der Elemente im Rückspülzyklus ermöglichen.

Die in der Figur dargestellten Filterelemente 22 münden mit ihrem Einlaßquerschnitt 24, also mit ihren freien Öffnungen, in zylindrisch entsprechend ausgebildete Ausnehmungen des unteren Abschlußdeckels 14 ein. An ihrem jeweils anderen gegenüberliegenden Ende sind die zum Einsatz kommenden Filterelemente 22 mit Abschlußkappen 26 versehen, über die die Filterelemente 22 an einem plattenförmigen Zwischenstück 28 gehalten sind, an das von oben her der obere Abschlußdeckel 12 anstößt.

Für die eigentliche Rückspülung mit der Rückspülfiltervorrichtung ist ein antreibbarer Spülarm 30 vorgesehen, der auf seiner Unterseite einen Anschluß in Form eines Fluidaustrittes 32 für verschmutztes Fluid vorsieht. Der Spülarm 30 läßt sich über ein Antriebsgestänge 34 nacheinander unter die Einlaßquerschnitte 24 der Filterelemente 22 verfahren. Die Rückspülung erfolgt also kontinuierlich mit dem eigentlichen Filtrationsvorgang, wobei nur die Filterelemente 22 rückgespült werden, und zwar von außen nach innen, mit dem gereinigten, bei der Filtration mit den sonstigen Filterelementen 22 entstehenden filtrierten Fluid, deren freie Einlaßquerschnitte 24 von dem Spülarm 30 nacheinander untergriffen sind. Die Rückspülrichtung ist in der Figur mit Pfeilen 35 von außen nach innen angegeben und die übliche Filtrationsrichtung gleichfalls mit Pfeilen 35a, diesmal von innen nach außen. Sind die Filterelemente 22 zu Gruppen geordnet entlang von zylindrischen oder konzentrischen Kreisbögen mehrfach innerhalb des Filtergehäuses 10 angeordnet, benötigt der Spülarm 30 einen weiteren Armabschnitt unterschiedlicher Länge (nicht dargestellt), mit der dann die weitere Gruppe an Filterelementen 22 seitens ihres jeweiligen Einlaßquerschnittes 24 untergriffen werden kann.

Der Austritt des derart verschmutzten, bei der Rückspülung entstehenden Fluids erfolgt über den rohrartig ausgebildeten Fluidaustritt 32. Das angesprochene Antriebsgehäuse 34 durchgreift entlang der Längsachse 36 der Rückspülfiltervorrichtung das Filtergehäuse 10 und durchgreift sowohl den oberen Abschlußdeckel 12 als auch den unteren Abschlußdeckel 14. Für einen Antrieb des Antriebsgestänges 34, insbesondere in Form einer Hohlwelle, ist am oberen Abschlußdeckel 12 eine nicht näher dargestellte Keilwellenverbindung vorgesehen, über die sich das Antriebsgestänge 34 mit einem Elektromotor 38 für einen drehenden Umlauf um die Längsachse 36 antreiben läßt. Der Filtereinlaß 18 ist von seiner Außenwandung her in der Art eines Diffusors ausgebildet, der die Fluideintrittsgeschwindigkeit des zu filtrierenden verschmutzten Fluids reduziert bei gleichzeitiger Druckerhöhung an den durch den Spülarm 30 freigelassenen Einlaßquerschnitten 24 der konischen Elemente 22. Die Diffusorwirkung wird insbesondere dadurch begünstigt, dass die Eintrittsquerschnitte am Filtereinlaß 18 als auch der Querschnitt des Aufnahmeraumes 40 im wesentlichen gleich ausgebildet sind und der Übergang zwischen Filtereinlaß 18 und Aufnahmeraum 40 im wesentlichen gleichförmig ohne Querschnittsreduzierung erfolgt.

Durch den konischen Aufbau der Filterelemente 22 wird erreicht, dass die Durchlaßfläche im jeweiligen Element sehr groß ist, wobei sich der Abstand zwischen den konischen Elementen 22 in Richtung des Filterauslasses 20 vergrößert, so dass dem filtrierten Fluid beim Austritt aus dem Innenraum des jeweiligen Filterelementes 22 ein kleinerer Widerstand entgegengesetzt wird gegenüber den bekannten Lösungen mit ausschließlich zylindrischen Elementen. Des weiteren ist durch den konischen Aufbau der Filterelemente 32 ein konstanter Flüssigkeitsstrom beim Rückspülen der Elemente erreicht. Der Fluidaustritt 32 ist mittels eines ansteuerbaren Sperrventils 42 absperrbar, wobei in Fluidströmrichtung nachfolgend in einer weiteren Fluidleitung 44 ein federbelastetes Rückschlagventil 46 angreift mit einer Schließkugel, die zur Umgebung 48 weist und federbelastet dergestalt in der Schließstellung gehalten ist. Ist das Sperrventil 42 geschlossen und kommt es aufgrund einer lang ausgebildeten weiteren Fluidleitung 44 zu einer Art Druckschlagsituation; kann sich das federbelastete Rückschlagventil 46 öffnen und dergestalt eine luftleitende Verbindung zwischen der Umgebung 48 und dem Inneren der Fluidleitung 44 herstellen. Dergestalt wird das Sperrventil 42 von Nachsaugvorgängen innerhalb der weiteren Fluidleitung 44 entlastet. Im umgekehrten Fall, also bei einer Fluiddruckbelastung in Richtung des Sperrventils 42, schließt federbelastet das Rückschlagventil 46 die Verbindung zwischen der Umgebung 48 und der Fluidleitung 44 ab und ein etwa in der Fluidleitung 44 eingeschlossenes Luftvolumen bildet eine Art Dämpferglied aus, das gleichfalls das Sperrventil 42 im geschlossenen Zustand sowie nachfolgende Anlagenteile der Filtereinrichtung vor Druckstößen entlastet. Vorzugsweise ist die Filteranlage über Ständerbeine 50 gegenüber einem Hallen- oder Schiffsboden 52 aufständerbar.

Die in der Figur als Ganzes mit 54 bezeichnete Filtereinrichtung ist an eine Vorratsflasche 56 anschließbar, die gleichfalls auf dem Boden 52 aufständerbar ist und die vorzugsweise unter hohem Druck als inertes Gas Stickstoffgas aufnimmt. Über einen Druckminderer 58 und über ein von außen ansteuerbares Magnetventil 60 läßt sich dergestalt das Innere der Vorratsflasche 56 über eine Verbindungsleitung 62 an die Filtereinrichtung 54 anschließen, indem das eine freie Ende der Verbindungsleitung 62 den oberen Abschlußdeckel 12 durchgreift und dergestalt eine Verbindung mit dem Inneren des Filtergehäuses 10 herstellt. Des weiteren ist vorgesehen, dass zumindest bei einem Teil der Filterelemente 22 in deren Innerem und in deren Längsrichtung eine Art Opferanode 64 als Kupferstab ausgebildet verläuft. Die dahingehende Opferanode 64 ist vorzugsweise als massiver Vollstab ausgebildet und über eine nicht näher dargestellte Schraubverbindung mit der oberen Abschlußkappe 26 der zuordenbaren Filterelemente 22 verbunden. Durch permanente Kupferabgabe braucht sich die Opferanode 64 auf, so dass von Zeit zu Zeit eine neue Opferanode 64 einzuwechseln ist, was gegebenenfalls mit dem Austausch eines verbrauchten Filterelementes 22 als Ganzes erfolgen kann.

Des besseren Verständnisses wegen wird im folgenden die Filteranlage anhand einer Seewasseranwendung näher erläutert. Nach Öffnen entsprechender, nicht näher dargestellter Seeventile am Schiffsrumpf dringt Seewasser, regelmäßig verschmutztes Hafenwasser, über den Filtereinlaß 18 in die Filtereinrichtung 54 ein und die einzelnen Filterelemente 22 reinigen in Pfeilrichtung 35a das verschmutzte Hafenwasser ab, wobei abgereinigtes Seewasser in Pfeilrichtung 21 über den Filterauslaß 20 nicht näher dargestellten Ballasttanks im Schiffsrumpf zuführbar ist. Gleichzeitig wird das derart abgereinigte Seewasser benutzt, um in Gegenrichtung gemäß der Pfeilrichtung 35 verschmutzte Filterelemente 22 während des Filtrierbetriebes gleichzeitig abzureinigen und die dahingehende Schmutzflüssigkeit gelangt bei geöffnetem Sperrventil 42 sowie entsprechend geöffneter Seeventile über die weitere Fluidleitung 44 zurück ins Freie. Bei dem dahingehenden üblichen Filtrationsbetrieb ist nicht auszuschließen, dass sich die Filterelemente 22 mit biologischem Material, wie Mikroorganismen, zumindest teilweise zusetzen, wobei diese insbesondere bei Schiffsreisen in warmen Gewässern ideale Wachstumsbedingungen hätten, um sich innerhalb der Filtereinrichtung 54 noch weiter auszubreiten. Würde dann die Filtereinrichtung 54 in einem anderen Gewässer, also in einem fremden Hafen oder auf offener See, wieder in Betrieb genommen werden, würde dies zu einem Ausspülen des biologisch mitgenommenen Materials führen mit der Folge, dass dergestalt in fremde Biotope die genannten Mikroorganismen eindringen könnten.

Um dies zu vermeiden, wird erfindungsgemäß noch im Ursprungshafen oder an Stellen des üblichen Seewasserfiltrationsbetriebes die Filtereinrichtung 54 als solche stillgesetzt und nach Öffnen des Magnetventils 60 dringt über das Druckminderventil 58 Stickstoffgas aus der Vorratsflasche 56 in das Innere des Filtergehäuses 10 ein. Eventuell im Filtergehäuse 10 noch verbliebenes Restfluid an Seewasser wird durch den hohen Stickstoffdruck aus dem Inneren des Filtergehäuses 10 zurückgedrängt, so dass die im Filtergehäuse 10 aufgenommenen Filterelemente 22 vollständig von dem Stickstoffgas durchspült werden. Somit entsteht innerhalb des Filtergehäuses 10 eine extrem trockene, sauerstofffreie Umgebung, was etwa eingebrachte Mikroorganismen, auch in Form von Pflanzenmaterial, zum Absterben bringt. Wird dann andernorts die Filteranlage wieder in Betrieb genommen, besteht nicht die Gefahr des ungewollten Fremdorganismusaustrags. Zusätzlich oder anstelle der Inertgasversorgung kann als Wirksubstanz auch die Opferanode 64 dienen, die vorzugsweise aus einem solchen Metallwerkstoff aufgebaut ist, der sich schädlich, insbesondere abtötend, auf Mikroorganismen auswirkt. Es hat sich gezeigt, dass insbesondere auch im Hinblick auf einen gewünschten Korrorionsschutz Opferanoden 64 aus Kupfer vorteilhaft einsetzbar sind.

Mit der erfindungsgemäßen Lösung ist nicht nur eine Filteranlage geschaffen, mit der sich übliche Filtrationsaufgaben zur Beseitigung von Verschmutzungen, insbesondere in Seewasser, erledigen lassen, sondern mit der es auch möglich ist, biologisches Material abzutöten bei gleichzeitiger Erhöhung des Korrosionsschutzes. Die erfindungsgemäße Filteranlage kommt mit wenigen Standardbauteilen aus, so dass der Kostenaufwand zur Realisierung der Filteranlage reduziert ist und des weiteren ergibt sich aufgrund der Standardbauteile ein funktionssicherer Gebrauch. Die Filteranlage kann überall dort eingesetzt werden, wo fluidische Medien zu filtrieren sind und wo man mit mikrobiellen Belastungen, die nicht erwünscht sind, zu rechnen hat.

## Patentansprüche

1. Filteranlage zur Filtration eines mit Mikroorganismen kontaminierten Fluids, umfassend:
- eine Fluidleitung zum Transport des Fluids,
- ein Filtergehäuse (10), das in die Fluidleitung geschaltet ist und einen Filtereinlass (18) für zu filtrierendes Fluid und einen Filterauslass (20) für gefiltertes Fluid aufweist,
- mindestens ein Filterelement (22), das im Filtergehäuse (10) angeordnet ist und Mittel mit einer sich schädlich auf Mikroorganismen auswirkenden Wirksubstanz aufweist,
- **gekennzeichnet durch** eine Inertgasversorgung zur Befüllung des Filtergehäuses (10) mit einem Inertgas unter Einbringung einer trockenen, sauerstofffreien Umgebung im Filtergehäuse (10), und
- mindestens eine Opferanode (64), die aus einem solchen Metallwerkstoff aufgebaut ist, der sich schädlich auf Mikroorganismen auswirkt.

2. Filteranlage nach Anspruch 1, **dadurch gekennzeichnet, dass** die jeweilige Opferanode (64) aus Kupfer aufgebaut ist.

3. Filteranlage nach einem der vorhergehenden Ansprüche, **dadurch gekennzeichnet, dass** die jeweilige Opferanode (64) als massiver Vollstab, insbesondere als Kupferstab, ausgebildet ist.

4. Filteranlage nach einem der vorhergehenden Ansprüche, **dadurch gekennzeichnet, dass** die Inertgasversorgung mindestens eine Vorratsflasche (56) aufweist, die das Inertgas beinhaltet und über eine Verbindungsleitung (62) mit dem Inneren des Filtergehäuses (10) verbindbar ist.

5. Filteranlage nach Anspruch 4, **dadurch gekennzeichnet, dass** das Inertgas in der jeweiligen Vorratsflasche (56) mit einem derart hohen Druck aufgenommen ist, dass eventuell im Filtergehäuse (10) noch verbliebenes Restfluid bei Befüllung des Filtergehäuses (10) mit Inertgas aus dem Inneren des Filtergehäuses (10) zurückgedrängt ist.

6. Filteranlage nach einem der vorhergehenden Ansprüche, **dadurch gekennzeichnet, dass** die Inertgasversorgung Stickstoffgas enthält.

7. Filteranlage nach einem der vorhergehenden Ansprüche, **dadurch gekennzeichnet, dass** zumindest ein Teil der Filterelemente (22) konisch ausgebildet ist.

8. Filteranlage nach einem der vorhergehenden Ansprüche, **dadurch gekennzeichnet, dass** mehrere in mindestens einer konzentrischen Bahn angeordnete Filterelemente (22) im Filtergehäuse (10) austauschbar aufgenommen sind.

9. Filteranlage nach einem der vorhergehenden Ansprüche, **dadurch gekennzeichnet, dass** das jeweilige Filterelement (22) für eine Filtration oder Rückspülung in beide Richtungen (35, 35a) durchströmbar ist.

10. Filteranlage nach Anspruch 9, **dadurch gekennzeichnet, dass** gleichzeitig die einen Filterelemente (22) die Filtration vornehmen und zumindest ein anderes Filterelement (22) zum Abreinigen seiner wirksamen Filterfläche rückspülbar ist.

11. Filteranlage nach Anspruch 9 oder 10, **dadurch gekennzeichnet, dass** für die Rückspülung ein antreibbarer Spülarm (30) vorgesehen ist, der einen Fluidaustritt (22) für verschmutztes Fluid aufweist und nacheinander unter freie Einlassquerschnitte (24) der jeweiligen Filterelemente (22) verfahrbar ist.

12. Filteranlage nach Anspruch 11, **dadurch gekennzeichnet, dass** der Fluidaustritt (22) ein ansteuerbares Sperrventil (42) aufweist und in Fluidströmungsrichtung nachfolgend in einer weiteren Fluidleitung (44) angeordnet ein Rückschlagventil (46) aufweist, das in geöffneter Stellung die Umgebung (48) mit der weiteren Fluidleitung (44) verbindet.

13. Verfahren zum Betrieb einer Filteranlage nach einem der vorhergehenden Ansprüche, **dadurch gekennzeichnet, dass** über die Fluidleitung zugeführtes, mit Mikroorganismen kontaminiertes Fluid mittels des jeweiligen Filterelements (22) in dem Filtergehäuse (10) filtriert wird und die mindestens eine Opferanode (64) einen sich schädlich auf die Mikroorganismen auswirkenden Wirkstoff freisetzt.

14. Verfahren nach Anspruch 13, **dadurch gekennzeichnet, dass** vor und/oder nach dem Filtrationsvorgang das Filtergehäuse (10) mit Inertgas befüllt und die im Filtergehäuse (10) aufgenommenen Filterelemente (22) vollständig von dem Inertgas durchspült werden.

## Claims

1. A filter installation for filtering a fluid contaminated with microorganisms, comprising:
- a fluid line for transporting the fluid,
- a filter housing (10) that is connected into the fluid line and a filter inlet (18) for fluid to be filtered and a filter outlet (20) for filtered fluid,
- at least one filter element (22) that is disposed in the filter housing (10) and has means with an active substance that has a damaging effect upon microorganisms,
- **characterised by** an inert gas supply for filling the filter housing (10) with an inert gas by bringing a dry, oxygen-free environment into the filter housing (10), and
- at least one sacrificial anode (64) which is made of a metal material which has a damaging effect upon microorganisms.

2. The filter installation according to Claim 1, **characterised in that** the respective sacrificial anode (64) is made of copper.

3. The filter installation according to any of the preceding claims, **characterised in that** the respective sacrificial anode (64) is in the form of a solid rod, in particular a copper rod.

4. The filter installation according to any of the preceding claims, **characterised in that** the inert gas supply has at least one supply bottle (56) that contains the inert gas and can be connected to the interior of the filter housing (10) by means of a connection line (62).

5. The filter installation according to Claim 4, **characterised in that** the inert gas is held in the respective supply bottle (56) at a pressure such that any fluid still remaining in the filter housing (10) is pushed back out of the interior of the filter housing (10) when filling the filter housing (10) with inert gas.

6. The filter installation according to any of the preceding claims, **characterised in that** the inert gas supply contains nitrogen gas.

7. The filter installation according to any of the preceding claims, **characterised in that** at least one part of the filter elements (22) is conical in form.

8. The filter installation according to any of the preceding claims, **characterised in that** a number of filter elements (22) arranged along at least one concentric path are held in the filter housing (10) such as to be interchangeable.

9. The filter installation according to any of the preceding claims, **characterised in that** a flow can pass through the respective filter element (22) in both directions (35, 35a) for filtration or backwashing.

10. The filter installation according to Claim 9, **characterised in that** at the same time some filter elements (22) undertake filtration and at least one other filter element (22) can be backwashed in order to clean its effective filter surface.

11. The filter installation according to Claim 9 or 10, **characterised in that** there is provided for the backwashing a drivable flushing arm (30) which has a fluid outlet (22) for contaminated fluid and can be moved below successive free inlet cross-sections (24) of the respective filter elements (22).

12. The filter installation according to Claim 11, **characterised in that** the fluid outlet (22) has a triggerable check valve (42) and in the fluid flow direction then has a non-return valve (46) located in a further fluid line (44) and which in the open position connects the surrounding area (48) to the further fluid line (44).

13. A method for operating a filter installation according to any of the preceding claims, **characterised in that** fluid delivered via the fluid line and contaminated with microorganisms is filtered by the respective filter element (22) in the filter housing (10) and the at least one sacrificial anode (64) releases an active agent which has a damaging effect upon the microorganisms.

14. The method according to Claim 13, **characterised in that** before and/or after the filtration process the filter housing (10) is filled with inert gas and the filter elements (22) held in the filter housing (10) are totally flushed by the inert gas.

## Revendications

1. Installation de filtration pour la filtration d'un fluide contaminé par des micro-organismes, comprenant :
- un conduit pour du fluide pour le transport du fluide,
- un corps (10) de filtre, qui est monté dans le conduit pour du fluide et qui a une entrée (18) de filtre pour du fluide à filtrer et une sortie (20) de filtre pour du fluide filtré,
- au moins un élément (22) filtrant, qui est placé dans le corps (10) du filtre et qui a des moyens ayant une substance active agissant de manière nocive sur des micro-organismes,
- **caractérisée par** une alimentation en gaz inerte pour remplir le corps (10) du filtre d'un gaz inerte en introduisant une atmosphère sèche et exempte d'oxygène dans le corps (10) du filtre, et
- au moins une anode (64) sacrificielle, qui est constituée en un matériau métallique tel qu'il agit de manière nocive sur des micro-organismes.

2. Installation de filtration suivant la revendication 1, **caractérisée en ce que** l'anode (64) sacrificielle respective est en cuivre.

3. Installation de filtration suivant l'une des revendications précédentes, **caractérisée en ce que** l'anode (64) sacrificielle respective est sous la forme d'un barreau plein massif, notamment d'un barreau de cuivre.

4. Installation de filtration suivant l'une des revendications précédentes, **caractérisée en ce que** l'alimentation en gaz inerte a au moins une bouteille (56) de réserve, qui contient le gaz inerte et qui peut communiquer avec l'intérieur du corps (10) du filtre par un conduit (62) de liaison.

5. Installation de filtration suivant la revendication 4, **caractérisée en ce que** le gaz inerte est reçu dans la bouteille (56) de réserve en ayant une pression haute, de manière à ce que du fluide restant subsistant encore éventuellement dans le corps (10) du filtre soit refoulé hors de l'intérieur du corps (10) du filtre, lors du remplissage du corps (10) du filtre par du gaz inerte.

6. Installation de filtration suivant l'une des revendications précédentes, **caractérisée en ce que** l'alimentation en gaz inerte contient de l'azote gazeux.

7. Installation de filtration suivant l'une des revendications précédentes, **caractérisée en ce qu'**au moins une partie de l'élément (22) filtrant est conique.

8. Installation de filtration suivant l'une des revendications précédentes, **caractérisée en ce que** plusieurs éléments (22) filtrants disposés en au moins une piste concentrique sont reçus de manière remplaçable dans le corps (10) du filtre.

9. Installation de filtration suivant l'une des revendications précédentes, **caractérisée en ce que** l'élément (22) filtrant respectif peut être traversé dans les deux sens (35, 35a) pour une filtration ou pour un lavage en retour.

10. Installation de filtration suivant la revendication 9, **caractérisée en ce qu'**en même temps l'un des éléments (22) filtrants effectue la filtration et au moins un autre élément (22) filtrant peut être lavé en retour pour nettoyer sa surface filtrante efficace.

11. Installation de filtration suivant la revendication 9 ou 10, **caractérisée en ce qu'**il est prévu pour le lavage en retour un bras (30) de lavage, qui peut être entraîné et qui a une sortie (22) de fluide pour du fluide souillé et qui peut être déplacé successivement sous des sections (24) transversales d'entrée dégagées des éléments (22) filtrants respectifs.

12. Installation de filtration suivant la revendication 11, **caractérisée en ce que** la sortie (22) pour du fluide comporte une vanne (42) d'arrêt pouvant être commandée et a, dans le sens du courant de fluide, successivement dans un autre conduit (44) pour du fluide, un clapet (46) antiretour, qui en la position ouverte met l'atmosphère (48) en communication avec l'autre conduit (44) pour du fluide.

13. Procédé pour faire fonctionner une installation de filtration suivant l'une des revendications précédentes, **caractérisé en ce que** l'on filtre, au moyen de l'élément (22) filtrant respectif dans le corps (10) du filtre, du fluide contaminé par des micro-organismes et amené par le conduit pour du fluide et la au moins une anode (64) sacrificielle libère une matière active agissant de manière nocive sur les micro-organismes.

14. Procédé suivant la revendication 13, **caractérisé en ce qu'**avant et/ou après l'opération de filtration, on remplit le corps (10) de filtre de gaz inerte et on lave complètement par le gaz inerte les éléments (22) filtrants reçus dans le corps (10) du filtre.
